# EUROPEAN PATENT APPLICATION

(11) **EP 1 911 820 A1**
(43) Date of publication of application: **16.04.2008**
(21) Application number: 07019921.1
(22) Date of filing: 11.10.2007
(51) Int. Cl.: C09D 175/04, B60J 10/00

(54) **Waterbased low noise generating coating**

(30) Priority: 12.10.2006 US 546890
(71) Applicant: National Starch and Chemical Investment Holding Corporation, New Castle, Delaware 19720 (US)
(72) Inventor: Dewitt, Julie, Fort Gratiot Michigan 48059 (US); Pinter, Michael W., Chesterfield, Michigan 48051 (US)
(74) Representative: Held, Stephan

(57) **Abstract**

A coating for weatherstrips, windshield wipers, door seals, trunk seals, sunroof seals, windshield seals, automotive trim and the like. The coating comprises a water-based formula that provides low noise and, optimally, also provides good weathering and abrasion resistance. The low noise property is achieved via a combination of waxes and/or aqueous colloidal silica, and a high molecular weight silicone resin. Flexibility and weathering resistance are achieved via the addition of a polyurethane/fluoropolymer resin binder blend and UV-stabilizers and absorbers. Also provided is a method of manufacturing such coatings that comprises the steps of pre-dispersing the wax particles in co-solvents and wetting agents and then combining the pre-dispersed wax particles with the silicone resin and other ingredients.

## Description

### FIELD OF THE INVENTION

The present invention relates to a water-based, low noise coating that provides good abrasion resistance and weathering properties in weatherstripping, windshield wiper blades and similar applications.

### BACKGROUND OF THE INVENTION

Vehicles and their occupants are exposed to a wide variety of noises, including external environmental noises and vehicle-generated noises such as those caused by interactions between component parts. Improvements in vehicle noise suppression systems and acoustics have resulted in a reduction in the overall level of noise within a vehicle's interior. The improved noise suppression leads to lower level, vehicle-generated noises, which may have previously been obscured by louder noises, becoming more apparent to the vehicle's occupants. One source for lower level noises is the friction between component parts in door, body, window and convertible seals, and the like. As louder noises are eliminated, the reduction of such lower level noises is consequently becoming more important to vehicle manufacturers. Rubber weatherstrip seals are utilized by automobile manufacturers to interface between various automobile parts in order to seal out water, wind, and ambient noise.

The noises caused by poor weatherstrip quality can create customer dissatisfaction and potential warranty costs for the equipment manufacturer. Most of the weatherstrip generated noise comes from friction between the weatherstrip rubber and the painted metal body or glass with which the weatherstrip is in contact. Many auto manufacturers require that the noise levels caused by weatherstripping are low. Further, auto manufacturers require a very stable weatherstrip with good abrasion and weather resistance so that it will perform continuously during the life of the vehicle. As the overall atmosphere inside a car is getting quieter, the requirements of a low noise weatherstrip coating are becoming more stringent.

It is known in the industry that low noise is very dependent on the weatherstrip seal design and the type of rubber used in the seal. To reduce the noise and provide other beneficial properties such as abrasion resistance, weatherstrips are commonly coated with various materials. In many instances, particulated weatherstrip coatings have been employed to adequately suppress the itch caused by substantial seal on glass movement. This solution is no longer preferred because of possible water leakage problems and the compromise in appearance due to the resulting textured surfaces. Because of the drawbacks with textured surfaces, some automobile manufacturers are now requiring smooth, non-particulated coatings for weatherstrips. Consumers have also shown an inclination for smooth, non-textured weatherstrip coatings.

It would be advantageous to develop a water-based coating for use in weatherstrips, windshield wipers and the like that would have low noise, high weather resistance, and good abrasion characteristics. It would be further advantageous to provide a universal coating that will provide low noise regardless of seal design and composition. The coating must be capable of application on thermoplastic olefin compounds (TPO), thermoplastic vulcanizate compounds (TPV) and ethylene-propylene-diene-terpolymers (EPDM) via spray, brush or drip and drag processes. It would also be advantageous to develop a method of manufacturing such a water-based coating.

### SUMMARY OF THE INVENTION

The present invention concerns a coating for weatherstrips, windshield wipers, door seals, trunk seals, sunroof seals, convertible top seals, windshield seals and the like. The coating comprises a water-based formula that provides low noise, good abrasion resistance and, optimally, also provides excellent weathering resistance. The low noise property is achieved via a combination of polyurethane resin, wax particles and a high molecular weight silicone resin. In an alternative embodiment, the wax particles are replaced by or supplemented with an aqueous colloidal silica. Flexibility and weathering resistance are achieved via a blend of different types of resin such as polyurethane and/or fluoropolymer.

### DETAILED DESCRIPTION OF THE PREFERRED EMBODIMENTS

The present invention describes a water-based coating having low noise with good abrasion and weathering resistance for use in weatherstrips. It is to be understood that the terms "weatherstrips" and "weatherstripping" are not intended to limit the scope of the present invention and include, but are not limited to, rubber or any other material, whether for use in vehicles or not, that may utilize and/or benefit from a noise or friction reduction, weather and abrasion resistant coating such as windshield wipers, outer belts and the like. In the automotive industry, coatings such as those of the present invention provide low noise for door seals, body seals, and convertible seals. The coatings of the present invention are achieved via a combination of waxes and/or aqueous colloidal silica, and silicone resin with a blend of resins and other optional additional ingredients. The coatings are capable of application on thermoplastic olefin compounds (TPO), thermoplastic vulcanizate compounds (TPV), ethylene-propylene-diene-terpolymers (EPDM) and other materials commonly utilized in weatherstripping and similar applications.

A weatherstrip coating having low noise is obtained via a combination of waxes, and silicone resin. Suitable waxes include polypropylene wax, polyethylene wax, PTFE, paraffin, carnauba wax and blends of one or more waxes. These types of waxes are commercially available from Michelman, Micro Powders, Shamrock Technologies, Byk-Chemie, and Noveon. The wax may be in various forms, including powder, micronized, emulsion or predispersion form. In one embodiment, the wax has a particle size in the range of about 10 nanometers to about 15 microns.

The silicone resin component of the coating preferably has a high molecular weight in the range of about 1,000 to about 800,000 with a viscosity in the range of about 15,000 cps to about 700,000 cps. A blend of silicone resins having different molecular weights may be utilized. One such blend would have three silicone resins having molecular weights in the ranges of about 1,000 to about 2,500, about 5,000 to about 20,000 and about 400,000 to about 800,000. High molecular weight silicone resins that may be utilized for this purpose include polydimethoxysiloxane which is commercially available from Dow Corning, Shin-Etsu Chemical, GE Silicones, Wacker Silicone and Goldschmidt Chemical Corporation.

A second important desired characteristic of weatherstripping is high weather resistance. This property is obtained via the addition of resin binders that enhance the weather resistance of the weatherstrip. The resin binders are preferably a polyurethane or a blend of polyurethanes, and fluoropolymer and are ultraviolet stable. Preferred resins are aliphatic polyester polyurethane, polyether polyurethane or polycarbonate polyurethane. Preferred fluoropolymers are fluorinated (Fluoro Ethylene-Alkyl Vinyl Ether) alternative copolymers or fluorinated acrylic copolymers. Such fluoropolymers are commercially available from Daiken Industries, Asahi Glass Company, DSM/Neoresins, DuPont and 3M.

Polyurethane is commercially available from Alberdingk Boley Inc.as Alberdingk, Soluol as Solucote, DSM/Neoresins as NeoRez, Bayer Material Science as Bayhydrol, and Noveon as Sancure. UV stabilizers and absorbers may also be added to provide weathering resistance. Among the UV stabilizers and absorbers that may be included in the resin binders are Tinuvin, commercially available from Ciba Specialty Chemicals Corp. and Chisorb, commercially available from Chitec.

Further additives, such as matting agents, curing agents, wetting agents, catalysts, carbon black, amines, rheology modifiers, chlorinated polyolefin, co-solvents, cross linking agents and mixtures thereof may also be added as desired. Useful curing agents and cross linking agents include, but are not limited to, carbodiimide, epoxy silane, epoxy, melamine, oxazoline, polyisocyanate, polyaziridine, isocyanate, blocked isocyanate, aziridine, melamine-formaldehyde and urea formaldehyde or mixtures thereof. When utilized, the additional additives comprise in the range of about 1 wt% to about 40 wt% of the coating and preferably in the range of about 1 wt% to about 25 wt% of the coating.

In an alternative embodiment, the wax is either replaced by or added to an aqueous colloidal silica. The aqueous colloidal silica preferably is nanosize with a particle size in the range of 5 to 100 nanometers. Suitable aqueous colloidal silicas are commercially available from Bayer as Levasil, from Degussa as Aerosil, from Nyacol as NexSil, and from Nalco Chemical Company as Nalco colloidal silica.

The liquid coating contains in the range of about 0.1 wt % to about 30 wt % wax, and preferably from about 0.5 wt % to about 5 wt % wax, in the range of about 1 wt% to about 40 wt % silicone resin and most preferably in the range of about 8 wt% to about 20 wt% silicone resin. The liquid coating contains in the range of about 4 wt % to about 60 wt % of the resin binder and most preferably in the range of about 15 wt % to about 45 wt % of the resin binder.

In an alternative embodiment, the liquid coating contains in the range of about 0.1 wt % to about 30 wt % aqueous colloidal silica, and preferably from about 0.5 wt % to about 15 wt % aqueous colloidal silica. The coating further contains in the range of about 1 wt% to about 40 wt % silicone resin and most preferably in the range of about 8 wt% to about 20 wt% silicone resin. The liquid coating contains in the range of about 4 wt % to about 60 wt % of the resin binder and most preferably in the range of about 15 wt % to about 45 wt % of the resin binder.

The coating is preferably manufactured as a suspension with little coagulation so that it may easily and uniformly be applied via spray, brush and drip and drag applications. Some additives, such as wetting agents and co-solvents may also be added to the pre-dispersion. To complete the coating, the remaining desired ingredients are added to the pre-dispersion. After the addition of the silicone resin, resin binder and other desired ingredients, the coating is crosslinked before it is applied.

The invention may be further described by the following non-limiting example.

EXAMPLE. Two water-based low noise coatings were formed. Formulation A was formed via the following method: Co-solvents, wetting agents, UV absorbers and stabilizers were combined along with wax particles to form a predispersion in the proportions shown in Table 1.

**Table 1. Predispersion Ingredients**

| Material | Weight % |
|---|---|
| Co-solvents | 50 |
| UV stabilizers and absorbers | 9.2 |
| Wetting agents | 4.1 |
| Wax | 36.7 |

All of the ingredients listed in Table 1 were added to a container and dispersed with a Cowles blade for 30 minutes. Next, polyurethane resin was charged to a separate mixing vessel. The predispersion listed in Table 1 was then added to the polyurethane resin and mixed for 15 minutes. De-ionized water was added to the mixture and mixed for 5 minutes. While continuing to mix at medium speed, additional ingredients including high molecular weight silicone resin, matting agents, carbon black, rheology modifier, and amine were added over a two hour period. Once the composition was thoroughly mixed, the pH was increased to 8.5 to 9.0 by the addition of ammonia. The final composition was filtered into a container through a 200 mesh screen.

Formulation B was formed through the following method:
Polyurethane resin was first charged to a mixing vessel. In a separate container co-solvent, UV absorber, UV stabilizer and wetting agents were mixed for 5 minutes at medium speed. This premix was then added to the polyurethane resin and mixed for 15 minutes. De-ionized water was added to the mixture and mixed for 5 minutes. Next, aqueous colloidal silica was added and mixed for 10 minutes. While continuing to mix at medium speed, additional ingredients including high molecular weight silicone resin, matting agents, carbon black, rheology modifier, and amine were added over a two hour period. Once the composition was thoroughly mixed, the pH was increased to 8.5 to 9.0 by the addition of ammonia. The final composition was filtered into a container through a 200 mesh screen.

The formulations were tested three times each for noise using both sine and random motion testing methods. For both testing methods the coated material was compressed against a countersurface. The sine testing method involved measuring the noise created by moving the countersurface adjacent to the coated material in a sine motion of 1 - 11 Hz frequency with a 1-10 mm stroke length. The random testing method involved moving the countersurface in various random motions. For each coating the formulations were tested for dry and wet noise, against both a painted panel and glass countersurface. The results of the tests are shown in Table 2.

**Table 2. Noise Properties of Coatings**

| | Sine | | Random | |
|---|---|---|---|---|
| Ave of 3 seals (Paint / glass) | Dry | Wet | Dry | Wet |
| Formula A (dBA) | 21/21 | 23/21 | 30/30 | 31/32 |
| Formula B (dBA) | 23/26 | 25/22 | 36/38 | 32/32 |

As shown in Table 2, the noise resulting from the testing of the coatings of the present invention was very low and well below the generally acceptable range of about 40 dBA.

Many modifications and variations of this invention can be made without departing from its spirit and scope, as will be apparent to those skilled in the art. The specific embodiments described herein are offered by way of example only, and the invention is to be limited only by the terms of the appended claims, along with the full scope of equivalents to which such claims are entitled.

## Claims

1. A low noise and weather resistant water-based coating comprising at least one wax, at least one silicone resin and at least one resin binder.

2. The coating of claim 1, further comprising at least one UV stabilizer, UV absorber or mixture thereof.

3. The coating of claim 1 wherein the at least one resin binder comprises a polyurethane resin, a blend of polyurethane resins or a blend of polyurethane resin and fluoropolymer.

4. The coating of claim 1 further comprising one or more of the group consisting of matting agents, curing agents, wetting agents, catalysts, carbon black, amines, rheology modifiers, chlorinated polyolefin, co-solvents, cross linking agents, aqueous colloidal silica and mixtures thereof.

5. The coating of claim 1, further comprising one or more of the group consisting of epoxy, epoxy silane, carbodiimide, melamine, oxazoline, polyisocyanate, isocyanate, blocked isocyanate, aziridine, melamine - formaldehyde, polyaziridine, urea formaldehyde or mixtures thereof.

6. The coating of claim 1, wherein the silicone resin has a molecular weight in the range from about 1,000 to about 800,000.

7. The coating of claim 6, wherein the silicone resin comprises a blend of silicone resins having different molecular weights.

8. The coating of claim 7, wherein the blend of silicone resins comprises a blend of three silicone resins having molecular weights in the ranges of about 1,000 to about 2,500; about 5,000 to about 20,000; and about 400,000 to about 800,000.

9. The coating of claim 8, wherein at least one of the silicone resins is polydimethoxysiloxane.

10. The coating of claim 3, wherein the coating comprises in the range of from about 0.1 wt % to about 30 wt % wax.

11. The coating of claim 10 wherein the coating comprises in the range of about 0.5 to about 5 wt % wax.

12. The coating of claim 3, wherein the coating comprises in the range of about 1 wt % to about 40 wt % silicone resin.

13. The coating of claim 14, wherein the coating comprises in the range of about 8 wt % to about 20 wt % silicone resin.

14. The coating of claim 3, wherein the coating comprises in the range of about 4 wt % to about 60 wt % resin binder.

15. The coating of claim 16, wherein the coating comprises in the range of about 15 wt % to about 45 wt % resin binder.

16. An article coated with the coating of claim 1.

17. The article of claim 19, wherein the article comprises a weatherstrip, windshield wiper or automotive seal.

18. A low noise and weather resistant water-based coating comprising at least one aqueous colloidal silica, at least one silicone resin and at least one resin binder.

19. The coating of claim 18, further comprising at least one UV stabilizer, UV absorber or mixture thereof.

20. The coating of claim 18 wherein the at least one resin binder comprises a polyurethane resin, a blend of polyurethane resins or a blend of polyurethane resin and fluoropolymer.

21. The coating of claim 18 further comprising one or more of the group consisting of matting agents, curing agents, wetting agents, catalysts, carbon black, amines, rheology modifiers, chlorinated polyol, co-solvents, cross linking agents, wax and mixtures thereof.

22. The coating of claim 18, further comprising one or more of the group consisting of epoxy, epoxy silane, carbodiimide, melamine, oxazoline, polyisocyanate, isocyanate, blocked isocyanate, aziridine, melamine - formaldehyde, polyaziridine, urea formaldehyde or mixtures thereof.

23. The coating of claim 18, wherein the silicone resin has a molecular weight in the range from about 1,000 to about 800,000.

24. The coating of claim 23, wherein the silicone resin comprises a blend of silicone resins having different molecular weights.

25. The coating of claim 24, wherein the blend of silicone resins comprises a blend of three silicone resins having molecular weights in the ranges of about 1,000 to about 2,500; about 5,000 to about 20,000; and about 400,000 to about 800,000.

26. The coating of claim 25, wherein at least one of the silicone resins is polydimethoxysiloxane.

27. The coating of claim 20, wherein the coating comprises in the range of from about 0.1 wt % to about 30 wt % aqueous colloidal silica.

28. The coating of claim 27 wherein the coating comprises in the range of about 0.5 to about 15 wt % aqueous colloidal silica.

29. The coating of claim 20, wherein the coating comprises in the range of about 1 wt % to about 40 wt % silicone resin.

30. The coating of claim 29, wherein the coating comprises in the range of about 8 wt % to about 20 wt % silicone resin.

31. The coating of claim 20, wherein the coating comprises in the range of about 4 wt % to about 60 wt % resin binder.

32. The coating of claim 31, wherein the coating comprises in the range of about 15 wt % to about 45 wt % resin binder.

33. An article coated with the coating of claim 18.

34. The article of claim 33, wherein the article comprises a weatherstrip, windshield wiper, automotive seal or trim component.

35. A method of producing a low noise, good abrasion and weather resistant coating comprising:
(a) forming a pre-dispersion containing wax, cosolvents, UV absorbers and stabilizers and wetting agents; and
(b) adding silicone resin and at least one resin binder and at least one crosslinking agent to the pre-dispersion.

36. The method of claim 35, further comprising at least one UV stabilizer, UV absorber or mixture thereof.

37. The method of claim 35 wherein the at least one resin binder comprises a polyurethane resin, a blend of polyurethane resins or a blend of polyurethane resin and fluoropolymer.

38. The method of claim 37 wherein the at least one resin binder comprises a blend of aliphatic polyester polyurethane, fluorinated acrylic copolymers, Fluoro Ethylene-Alkyl Vinyl Ether, fluorinated alternative copolymers or mixtures thereof.

39. The method of claim 35 further comprising the step of adding one or more of the group comprising dispersing agents, rheology modifiers, amines, preservatives, wetting agents, co-solvents, carbon black, matting agents, chlorinated polyol, catalysts, aqueous colloidal silica and mixtures thereof.

40. The method of claim 35, further comprising the step of adding one or more of the group comprising epoxy, epoxy silane, carbodiimide, melamine, oxazoline, polyisocyanate, isocyanate, blocked isocyanate, aziridine, melamine -formaldehyde, polyaziridine, urea formaldehyde or mixtures thereof.

41. The method of claim 35, wherein the silicone resin has a molecular weight in the range from about 1,000 to about 800,000.

42. The method of claim 41, wherein the silicone resin comprises a blend of silicone resins having different molecular weights.

43. The method of claim 42, wherein the blend of silicone resins comprises a blend of three silicone resins having molecular weights in the ranges of about 1,000 to about 2,500; about 5,000 to about 20,000; and about 400,000 to about 800,000.

44. The method of claim 43, wherein the high molecular weight silicone resin is polydimethoxysiloxane.

45. The method of claim 35, wherein the coating comprises in the range of from about 0.1 wt % to about 30 wt % wax.

46. The method of claim 34, wherein the coating comprises in the range of about 0.5 to about 5 wt % wax.

47. The method of claim 34, wherein the coating comprises in the range of about 1 wt % to about 40 wt % silicone resin.

48. The method of claim 47, wherein the coating comprises in the range of about 8 wt % to about 20 wt % silicone resin.

49. The method of claim 34, wherein the coating comprises in the range of about 4 wt % to about 0 wt % of the at least one resin binder.

50. The method of claim 49, wherein the coating comprises in the range of about 15 wt % to about 45 wt % of the at least one resin binder.

51. An article coated via the method of claim 34.
